# EUROPEAN PATENT SPECIFICATION

(11) **EP 3 708 391 B1**
(45) Date of publication and mention of the grant of the patent: **04.05.2022**
(21) Application number: 20162348.5
(22) Date of filing: 11.03.2020
(51) Int. Cl.: B60D 1/54, B60D 1/06, B60D 1/145, B60D 1/24, B60D 1/48

(54) **RETRACTABLE TOWING HOOK ARRANGEMENT**
EINZIEHBARE ANHÄNGEKUPPUNGSANORDNUNG
AGENCEMENT DE CROCHET DE REMORQUAGE RÉTRACTABLE

(30) Priority: 12.03.2019 SE 1950306
(43) Date of publication of application: 16.09.2020
(73) Proprietor: Brink Towing Systems B.V., 7951 CX Staphorst (NL)
(72) Inventor: EISING, Frederik Jacob, 9415 PW Hijken (NL); BOVENKAMP, Bas Kasper, 8381 CH Vledder (NL)
(74) Representative: Valea AB

(56) References cited:
- EP-A1- 1 407 901
- EP-A1- 1 902 870
- EP-A2- 1 084 871
- DE-A1- 10 243 045
- DE-A1-102016 204 846
- DE-U1-202004 006 204

## Description

### TECHNICAL FIELD

The present disclosure relates to a retractable towing hook arrangement for a vehicle. The retractable towing hook arrangement is adapted to enable a towing hook, after being mounted to the vehicle, to be displaced between a towing position and a retracted position.

### BACKGROUND

Towing hooks for towing towable objects or for carrying carryable objects, such as e.g. trailers or bike racks, are commonly used today on vehicles. In most cases, a towing hook is mounted on the vehicle during the assembly process of the vehicle, although after sales mounting, e.g. by an authorized garage, is possible. For esthetical and practical reasons it may be desirable to have a towing hook which can be displaced between a towing position and a retracted position. The retracted position may herein also be referred to as a stowed position. Generally such towing hooks can also be referred to as retractable towing hooks.

There are several considerations when constructing a towing hook of the retractable kind. The available space in which a retractable towing hook arrangement can be mounted on a vehicle varies between different manufacturers and models. The rotation path, movement path or movement pattern, of the towing hook can be very space consuming and impart restrictions on the configuration of the towing hook. The towing hook should further, when in the retracted position, not be visible or at least not be clearly visible so as not to affect the aesthetic appearance of the vehicle. It is also important that the towing hook can be retracted to a position in which it is subjected to no or low risk of being damaged by the ground on which the vehicle rests or travels over, or by loose objects from the ground, such as e.g. debris, dirt or rubble.

Known retractable towing hooks are typically quite complex. One example of a retractable towing hook arrangement is disclosed in the European patent no. EP 2,875,972 B1. In order to displace the retractable towing hook arrangement in the mentioned patent between a towing position, sometimes referred to as an operative position, and a retracted position, sometimes referred to as an inoperative position, the towing hook has to perform a plurality of movements such as pivoting movements around two different pivot axes as well as rotational movement around a rotation axis. The towing hook arrangement further comprises a guide housing and a gate body, which guides and directs a movement of a coupling arm with respect to the guide housing and also the movement of the guide housing with respect to the vehicle holding body in order to activate or deactivate the pivot axes of the towing hook arrangement. Due to the amount of movable parts comprised in the retractable towing hook arrangement, the retractable towing hook arrangement in the mentioned patent is very complex and costly to manufacture. The shear amount of movable parts comprised in the solution according to the mentioned patent also makes it bulky and increases the risk of failure.

According to its abstract, EP 1 084 871 A2 discloses a trailer coupling for motor vehicles, with a rod which is designed as a movable part between a rest position and an operating position by means of a motor axially adjustable in the direction of the rod, a pivot angle being provided between the rest position and the operating position. To make it easier to adapt the design to different mounting situations in different vehicle types, it is provided that the rest position and the operating position have a retraction direction which is designed in the same direction. The document shows the preamble of independent claim 1.

According to its abstract, DE 102 43 045 A1 discloses a trailer coupling for motor vehicles containing a coupling arm which at one end carries a head piece for attaching a trailer and at the other end is firmly connected to a shaft piece which is rotatable and axially movable in a bearing part. The coupling arm can be adjusted between a rearward use position and a non-use position further forward and higher. The adjustment movement contains a linear, axially directed movement section facing the non-use position and a pivoting movement section facing the use position, in which the shaft piece is rotated. A guide track is arranged on the shaft piece or on the bearing part, to which a guide means arranged on the bearing part or on the shaft piece is assigned. The coupling arm can be manually pivoted at least over the pivoting movement section.

### SUMMARY

It is thus an object of the present disclosure to provide a retractable towing hook arrangement which is simple and cost effective to manufacture and which reduces the space required for storing the towing hook arrangement on the vehicle.

This object is at least partly achieved by means of providing a retractable towing hook arrangement for a vehicle according to claim 1. The towing hook arrangement comprising a towing hook for being connected to an object to be towed or carried, a cross beam adapted for being mounted to the vehicle and a retracting assembly enabling said towing hook to be displaced in relation to the cross beam between a towing position and a retracted position when mounted on said vehicle. The retracting assembly comprises a first retracting member and a second retracting member being rotatably arranged around a rotation axis in relation to each other and slidably arranged along the rotation axis in relation to each other. The first retracting member comprises one or more circumferential guiding grooves and the second retracting member comprises one or more guiding protrusions. Each of the one or more guiding protrusions is slidably arranged in one of the one or more circumferential guiding grooves. The one or more circumferential guiding grooves has/have a substantially helical shape, such that a translational movement of the one or more guiding protrusions through the one or more guiding grooves in the first retracting member creates a rotational movement of the second retracting member in relation to the first retracting member around the rotation axis. The first retracting member comprises a first set of locking members being arranged to engage with a second set of locking members being fixedly arranged to the second retracting member when the towing hook is in the towing position, in order to prevent a rotational movement of the first retracting member in relation to the second retracting member.

Due to the shape of the guiding groove, the movement of the towing hook from the towing position to the retracted position and the locking of the towing hook in the towing position may be performed in a single continuous movement. Due to this improved movement profile, the locking and movement of the retractable towing hook arrangement can be performed using a single actuator providing a translatory motion. This also reduces the number of movable parts and thereby the cost and effort for manufacturing the retractable towing hook arrangement. Reducing the number of movable parts also improves the strength of the retractable towing hook arrangement and may also reduce the size of the retractable towing hook arrangement.

The first retracting member may form a single unit comprising both the one or more guiding grooves and the first set of locking members. The second retracting member may form a single unit comprising both the one or more guiding protrusions and the second set of locking members.

Alternatively, the first retracting member may comprise two portions, with a first portion comprising the one or more guiding grooves and the second portion comprising the first set of locking members. Also the second retracting member may comprise two portions, with a first portion comprising the one or more guiding protrusions and the second portion comprising the second set of locking members.

The one or more guiding protrusions may be constituted by one or more guiding pins. In that case, the towing hook arrangement comprises a towing hook for being connected to an object to be towed or carried, a cross beam adapted for being mounted to the vehicle and a retracting assembly enabling said towing hook to be displaced in relation to the cross beam between a towing position and a retracted position when mounted on said vehicle. The retracting assembly comprises a first retracting member and a second retracting member being rotatably arranged around a rotation axis in relation to each other and slidably arranged along the rotation axis in relation to each other. The first retracting member comprises one or more circumferential guiding grooves and the second retracting member comprises one or more guiding pins. Each of the one or more guiding pins is slidably arranged in one of the one or more circumferential guiding grooves. The one or more circumferential guiding grooves has/have a substantially helical shape, such that a translational movement of the one or more guiding pins through the one or more guiding grooves in the first retracting member creates a rotational movement of the second retracting member in relation to the first retracting member around the rotation axis. The first retracting member comprises a first set of locking members being arranged to engage with a second set of locking members being fixedly arranged to the second retracting member when the towing hook is in the towing position, in order to prevent a rotational movement of the first retracting member in relation to the second retracting member. The retracting assembly may comprise an actuator for performing the translational movement of the first retracting member and the second retracting member in relation to each other.

As an alternative or a complement to the guiding pin, the one or more guiding protrusions may be constituted by one or more guiding profiles located on a surface of the second retracting member. Preferably, the one or more guiding profiles has/have a substantially helical shape. The substantially helical shape of the guiding profile of the second retracting member is adapted to cooperate, e.g. slide in, the one or more guiding grooves of the first retracting member. Hence, the helical shape of the one or more guiding profiles is adapted to the helical shape of the one or more guiding grooves, e.g. having the same helix angle. In that case, the second retracting member may comprise a sleeve or bush having the one or more guiding profiles on the inside surface.

The actuator may comprise a threaded spindle being rotatably arranged on the first or the second retracting member. The other of the first and second retracting member may comprise an actuator receiving portion comprising a threaded through-hole for receiving the threaded spindle. Thereby a rotation of the threaded spindle causes the translational movement of the first and second retracting members in relation to each other.

The first and the second retracting member may have a cylindrical shape. An inner diameter of one of the first and the second retracting members may be larger than the outer diameter of the other of the first and the second retracting member. One of the first and the second retracting members is thus adapted to receive the other of the first and the second retracting members in a coaxial manner. By arranging the first and the second retracting members in a coaxial manner, the packaging size of the retractable towing hook arrangement may be further reduced. In addition, the coaxial arrangement of the first and second retracting members assists in guiding the towing forces from the tow hook toward the vehicle. By arranging one of the retracting members inside the other one, the outer retracting member may also act as a housing, which protects the moving parts of the retractable towing hook arrangement from moisture and dirt. Furthermore, the coaxial arrangement of the first and second retracting members improve the guiding of the towing forces from the towing hook to the vehicle.

The locking members may be arranged to engage in order to lock the first and the second retracting members in a rotationally fixed manner. Thereby an undesired rotation of the towing hook due to loads applied to the towing hook by a towed or carried object is prevented.

The locking members may comprise a plurality of protrusions. The plurality of protrusions of the first and second locking members may respectively be arranged around a circumference of the first or the second retracting members on a surface of the first and second retracting members arranged perpendicular to the rotation axis. Thereby, the loads applied to the towing hook by a towed or carried object may be evenly distributed over the circumference of the first and second retracting members.

The first locking member may be a single protrusion and the second locking member may be a receiving member adapted to receive the single protrusion when the towing hook is in the towing position. The single protrusion requires less space than the plurality of protrusions and thus allows the size of the retracting assembly to be reduced.

A first end section of the circumferential guiding groove may extend in a substantially axial direction, such that when the one or more guiding protrusions of the second retracting member slide/s through the first end section of the one or more guiding grooves of the first retracting member, the first and the second retracting members perform a substantially translatory movement, i.e. a substantial linear translation in the axial direction, which causes the first and the second set of locking members to engage.

The helical shape of the guiding groove may have a helix angle in the range of 5-50 degrees in relation to the rotation axis.

The helical shape of the guiding groove may have a helix angle in the range of 7-45 degrees in relation to the rotation axis.

The first retracting member may be fixedly arranged to the towing hook and the second retracting member may be fixedly arranged to the cross beam. In some further embodiments the first retracting member may be fixedly arranged to the cross beam and the second retracting member may be fixedly arranged to the towing hook. Thereby, the translational movement of the first and second retracting members in relation to each other causes the towing hook to move between a retracted position and a towing position in relation to the vehicle, when the cross beam is mounted to the vehicle.

The one or more guiding protrusions may be slidably arranged in the one or more guiding grooves by means of bearings. This reduces the friction between the one or more guiding protrusions and the one or more guiding grooves and thereby the translational force required for performing the movement of the retracting members in relation to each other.

The towing hook arrangement may be configured to be able to assume a triggered position, located in between the towing position and the retracted position, wherein the towing position of the towing hook arrangement corresponds to the towing position of the towing hook and the retracted position of the towing hook arrangement corresponds to the retracted position of the towing hook. In the triggered position, the first set of locking members and the second set of locking members are disengaged from each other.

The towing hook arrangement may be configured such that there is a linear translational displacement along the rotation axis from the towing position to the triggered position. During this linear translational displacement, the position of the one or more guiding grooves is not altered in relation to the position of the one or more guiding protrusions, at the same time as the first set of locking members and the second set of locking members are disengaged from each other. This may for example be obtained for towing hook arrangements, in which the first retracting member comprises two portions, with a first portion comprising the one or more guiding grooves and the second portion comprising the first set of locking members, and/or in which the second retracting member comprises two portions, with a first portion comprising the one or more guiding protrusions and the second portion comprising the second set of locking members. In that case, the two first portions of the first and second retracting members, respectively, may move together in the linear translation, while the two second portions of the first and second retracting members, respectively, may move relative to each other to disengage the locking members.

This linear displacement may be followed by a combined rotational and linear translational displacement from the triggered position to the retracted position. During this combined displacement, the one or more guiding protrusions is/are displaced in relation to the one or more guiding grooves, e.g. by the first portion of the first retracting member moving in relation to the first portion of the second retracting member.

The towing hook arrangement may comprise a triggering mechanism, which is adapted to be activated to retain the first portion of the first retracting member in relation to the first portion of the second retracting member or vice versa. Hence, before activation of the triggering mechanism, the two first portions are movable together and after activation of the triggering mechanism, the two first portions are movable in relation to each other. Accordingly, the triggering mechanism is activated in the triggered position.

Generally seen, the one or more guiding protrusions is/are adapted in size and shape to the size and shape of the one or more circumferential guiding grooves. The one or more guiding protrusions may, alternatively to what have been disclosed herein, have a longitudinal extension which is longer than their transversal extension as seen in a direction of the one or more guiding grooves. The one or more guiding protrusions may consequently have a non-symmetrical shape. Such longitudinally extended guiding protrusions may provide a beneficially strong connection between the first retracting member and the second retracting member in that any torsional forces acting on the towing hook arrangement may be suitably transferred between the first retracting member and the second retracting member through the interconnection of the one or more guiding protrusions and the one or more guiding grooves. The longitudinal extension of the one or more guiding protrusions is arranged to correspond to the longitudinal extension of the one or more circumferential guiding grooves.

Another alternative for the one or more guiding protrusions, is a guiding protrusion, such as a guiding pin, which instead of being fixedly coupled to the second retracting member, may be pendulating or trailing in relation thereto. It is still coupled to the second retracting member, but is hingedly connected to the second retracting member through for example one or more hinges. Such hinges may for example be accomplished through pivotable links. The guiding protrusion may in such a case be given a pendulating or trailing movement pattern within its respective guiding groove. Yet another alternative is a guiding protrusion, such as a guiding pin, which is loose within certain limits in relation to the second retraction member. It consequently has a certain degree of movement or rotation within those limits. This may be achieved through one end of the guiding protrusion being located within a gap or aperture in the second retracting member, which allows the guiding protrusion the degree of movement or rotation. The gap or aperture is larger in size than the end of the guiding protrusion, which is inserted therein.

The one or more circumferential guiding grooves may be configured as one or more long narrow channels or depressions. They may either be facing inwardly or outwardly from the first retracting member for meeting and interconnecting with the one or more guiding protrusions, which consequently are facing in the opposite direction. The one or more circumferential guiding grooves may be given the shape of a through-hole through the first retracting member. The first retracting member may be located as a sleeve surrounding the second retracting member or the second retracting member may be located as a sleeve surrounding the first retracting member.

The embodiments herein further relate to a vehicle comprising the retractable towing hook arrangement as disclosed herein.

### BRIEF DESCRIPTION OF THE DRAWINGS

Non-limiting embodiments of the present invention will be described in greater detail with reference to the accompanying figures in which;
figure 1a shows a retractable towing hook arrangement according to embodiments herein in a towing position on a vehicle;
figure 1b shows a retractable towing hook arrangement according to embodiments herein in a retracted position on the vehicle;
figure 2 shows an exploded view of a portion of the retractable towing hook arrangement in the form of a retracting assembly according to embodiments herein;
figure 3a shows an assembled side view of a portion of the retracting assembly according to a first embodiment herein;
figure 3b shows an exploded side view of a portion of the retracting assembly according to a second embodiment herein;
figure 4 shows a top down view of the retracting assembly according to embodiments herein;
figure 5a shows the retracting assembly according to embodiments herein in a towing position;
figure 5b shows the retracting assembly according to embodiments herein in a retracted position;
figure 6a shows an exploded side view of a portion of the retracting assembly according to a third embodiment herein;
figure 6b shows a first portion of a first retracting member of the third embodiment:
figure 6c shows a first portion of a second retracting member of the third embodiment;
figure 6d shows the retracting assembly of the third embodiment in a towing position;
figure 6e shows a cross-sectional view of the retracting assembly in the towing position;
figure 6f shows the retracting assembly of the third embodiment in a triggered position;
figure 6g shows the retracting assembly of the third embodiment in a retracted position.

### DETAILED DESCRIPTION OF EMBODIMENTS

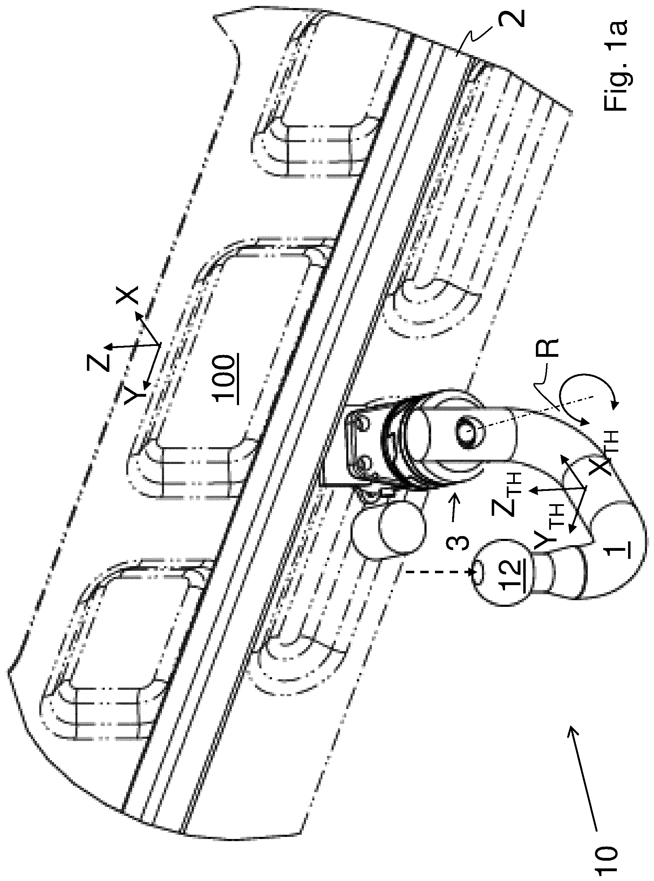

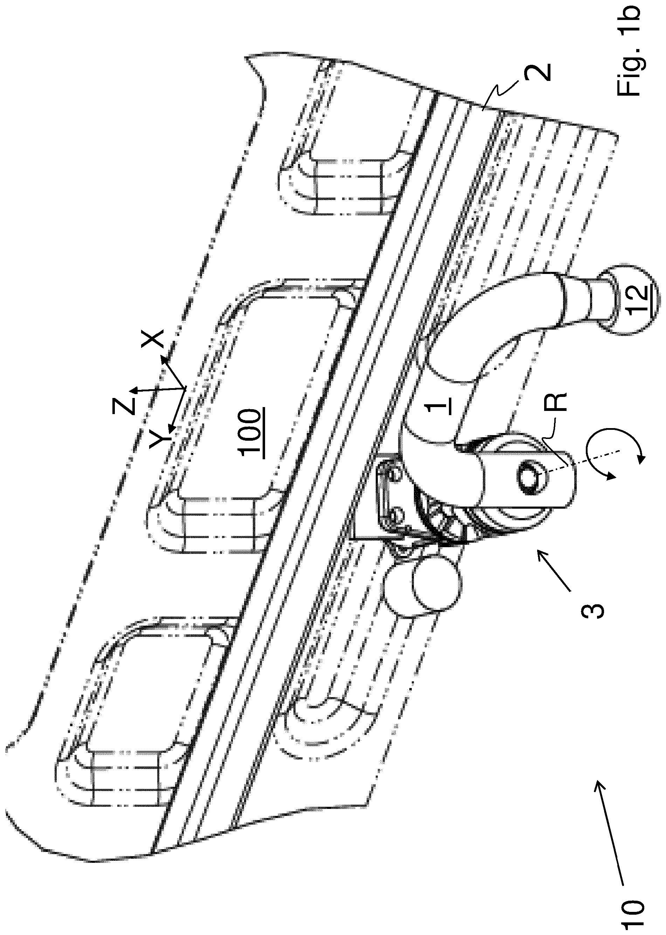

**Figure 1a** **and** **1b** show a retractable towing hook arrangement 10 for a vehicle 100 according to embodiments herein. The towing hook arrangement 10 comprises a towing hook 1 for being connected to an object to be towed or carried, a cross beam 2 adapted for being mounted to the vehicle and a retracting assembly 3 enabling said towing hook 1 to be displaced in relation to the cross beam 2 between a towing position (shown in figure 1a) and a retracted position (shown in figure 1b) when mounted on said vehicle 100. The towing hook 1, in the shown non-limiting embodiment, can thus be displaced between a towing position, shown in figure 1a, and a retracted position, shown in figure 1b. In the towing position, a towable or carryable object may be attached to the towing hook 1, after which the vehicle can tow or carry the towable or carryable object. In the retracted position, the towing hook 1 may be positioned behind a rear bumper of the vehicle and is at least partly concealed from view by the rear bumper of the vehicle. The towing hook 1 is enabled to be displaced between the towing position and the retracted position by means of the retracting assembly 3. The towing hook 1 comprises a ball portion 12 adapted to be connected with the towable or carryable object. The size of the ball portion 12 can be selected to have different diameters but may in a preferred embodiment be 50.8 mm (two inches) or 50 mm in diameter.

The towable or carryable object may be any object which is specifically adapted to be mounted on a towing hook or an equivalent element. Such objects can generally be divided into two sub categories. Firstly; pivotable towable objects such as a trailer, a caravan, a boat trailer, a cargo trailer, or similar. Pivotable towable objects rely on the towing hook to pull or push the pivotable towable object, while the pivotable towable object itself generally tends to have at least one ground supporting element such as wheels or skis or the like. The towing hook does not carry the full weight of a pivotable towable object. A pivotable towable object is further enabled to pivot about the towing hook and is thus relying on the mobility of the connection to the towing hook in order to be towed in a safe and convenient manner. Secondly; the towable or carryable object can be a carried accessory such as a bike carrier, a luggage carrier, a towing hook protection member or the like. Towing hook accessories are generally fixed to the towing hook and rely on that the towing hook, or the equivalent element, is carrying the full weight of the towing hook accessory. Although some load relief may sometimes be provided by the vehicle itself, a carried accessory does not have ground supporting elements such as wheels or skis or the like.

Independently of the towable or carryable object attached to the towing hook 1, the towing hook 1 will be subjected to a downwardly directed force component illustrated in figure 1a with a dashed arrow. Due to such downwardly directed force, the towing hook 1 will be subjected to a torque around a rotation axis R.

For the purpose of orientation, the following vehicle coordinate system will be used herein. An X-axis, corresponding to a longitudinal extension of the vehicle, a Y-axis, corresponding to a transverse extension of the vehicle, and a Z-axis, corresponding to the vertical extension of the vehicle. The X-axis and the Y-axis are parallel to a ground plane of the vehicle. The extensions of the vehicle are to be understood as when the vehicle is in a ready to use state on the road. The X, Y and Z axes are perpendicular to each other and intersect at an origin. As described herein, the origin is a center of mass of the vehicle. This vehicle coordinate system corresponds to an intermediate axis system according to ISO 8855. For simplicity, a plane defined by the X-axis and the Y-axis is herein referred to as a horizontal plane or Z-plane, a plane defined by the X- axis and the Z-axis is herein referred to as a vertical longitudinal plane or Y-plane and a plane defined by the Y-axis and the Z-axis is herein referred to as a vertical transverse plane or X-plane.

A separate coordinate system may also be defined for the towing hook 1. The towing hook may have an X-axis (X_{TH}), being parallel to the X-axis of the vehicle when the towing hook 1 is mounted to the vehicle and in the towing position, a Y-axis (Y_{TH}), being parallel to the Y-axis of the vehicle when the towing hook 1 is mounted to the vehicle and in the towing position, and a Z-axis (Z_{TH}), being parallel to the Z-axis of the vehicle when the towing hook 1 is mounted to the vehicle and in the towing position. The X, Y and Z axes are perpendicular to each other and intersect at a center of mass of the towing hook 1. A plane of the towing hook 1 defined by X_{TH} and Z_{TH} may herein be referred to as a main towing hook plane.

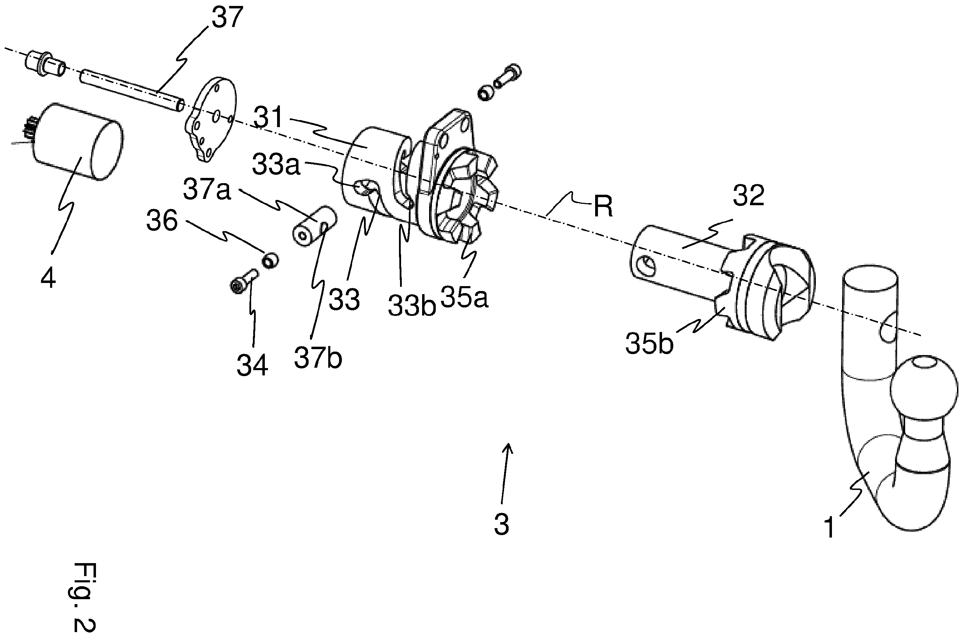

**Figure 2** shows an exploded view of portions of the retractable towing hook arrangement 10 in form of the retracting assembly 3 according to a first embodiment herein. The retracting assembly 3 comprises a first retracting member 31 and a second retracting member 32. The first and the second retracting members 31, 32 are rotatably arranged around a rotation axis R in relation to each other and slidably arranged along the rotation axis R in relation to each other. The first retracting member 31 comprises one or more circumferential guiding grooves 33. The one or more circumferential guiding grooves 33 has/have a substantially helical shape. In other words, the circumferential guiding grooves 33 are arranged on the first retracting member 31, such as on a surface of the first retracting member 31, in a helical fashion. When the first retracting member 31 comprises more than one circumferential guiding groove 33, the guiding grooves 33 may be congruent helices having the same axis. The plurality of circumferential guiding grooves 33 may be arranged evenly distributed around the circumference of the first retracting member 31. The second retracting member 32 comprises one or more guiding protrusions 34, in the illustrated embodiment exemplified by one or more guiding pins 34. The one or more guiding protrusions 34 is/are arranged to protrude from the second retracting member 32 in a radial direction of the second retracting member 32 and engage into the circumferential guiding grooves 33 of the first retracting member. The one or more circumferential guiding grooves 33 in combination with the one or more guiding protrusions 34 thus control the movement of the second retracting member 32 in relation to the first retracting member 31.

In order to move the towing hook 1, when the retractable towing hook arrangement 10 is mounted to the vehicle, behind the rear bumper of the vehicle, the towing hook 1 has to be rotated in the range of 90-270 degrees around the rotation axis R. The second end section 33b of the guiding groove 33 may thus be located between 90-270 degrees from the first end section 33a of the guiding groove 33. By combining the rotation with a translational movement, a larger rotation angle may be used without the guiding grooves intersecting each other. Thereby an increased rotation angle may be allowable. A small translation of the second retracting member 32 in relation to the first retracting member 31 along the rotation axis is beneficial since it reduces the packaging space, i.e. the total claimed space of the retractable towing hook arrangement. The minimal requirement of this translational movement, is that the one or more guiding grooves 33 for the guiding protrusions 34 does/do not cross each other in a same plane perpendicular to the rotation axis. The one or more helical guiding grooves 33 may therefore have a helix angle in the range of 5-50 degrees, preferably 7-45 degrees, in relation to the rotation axis, such that the one or more helical guiding grooves 33 does/do not intersect each other. Since the helical groove 33 may extend in two possible directions around the first retracting member 31, which may commonly be referred to as the helix angle being right-handed or left-handed, the angular values disclosed herein shall be understood as absolute values.

Each of the one or more guiding protrusions 34 is slidably arranged in at least one of the one or more circumferential guiding grooves 33. Due to the substantially helical shape of the one or more circumferential guiding grooves 33, a translational movement of the one or more guiding protrusions 34 through the one or more circumferential guiding grooves 33 in the first retracting member 31 creates a rotational movement of the second retracting member 32 in relation to the first retracting member 31 around the rotation axis R. The amount of translational movement of the second retracting member 32 in relation to the first retracting member 31, may be dependent on the angle of the helix of the one or more circumferential guiding grooves 33. The helix angle may be calculated based on the circumference of the first retracting member and the pitch of the guiding groove 33. The pitch of the guiding groove 33 is the height of one complete helix turn, measured parallel to the axis of the helix, i.e. parallel to the rotation axis R of the retracting assembly 3. When the first and second retracting member 31, 32 are moved in a translational direction in relation to each other, the one or more guiding protrusions 34 of the second retracting member 32 follow/s the helix shape of the guiding groove 33 of the first retracting member which causes the first and second retracting member 31, 32 to rotate in relation each other around the rotation axis R.

The retractable towing hook arrangement 10 may further comprise an actuator 4 for providing the translational movement of the first retracting members 31 and/or second retracting members 32 in relation to each other. The actuator 4 may e.g. comprise a rotational actuator, such as an electrical motor, or a translatory actuator, such as e.g. a hydraulic cylinder, a pneumatic cylinder or a magnet. The first retracting member 31 and the second retracting member 32 may comprise a respective actuator receiving portion and/or member for receiving a respective end of the actuator 4. When the actuator 4 comprises an electrical motor providing a rotary motion, the rotary motion may be translated to a translational movement of the first and second retracting members in 31, 32, in relation to each other, by means of a threaded spindle 37. The threaded spindle 37 may be translationally fixed arranged at the actuator receiving portion 37a of one of the first and second retracting members 31, 32 and may engage a threaded through-hole 37b arranged at the actuator receiving portion 37a of the second of the first and second retracting members 31, 32. In the embodiment shown in figure 2 the actuator receiving portion 37a of the second retracting member 32 is a separate part which may be inserted into and secured to the second retracting member 32 during assembly of the retracting assembly 3. A rotation of the threaded spindle 37 causes the one retracting member out of the first or second retracting members 31, 32, which comprises the threaded through-hole 37b, in the embodiment shown in figure 2 this is the second retracting member 32, to climb the threads of the threaded spindle 37 and perform a translational movement in an axial direction of the threaded spindle 37. This translational movement causes the one or more guiding protrusions 34 to move through the one or more circumferential guiding grooves 33 and thereby to rotate the first and the second retracting members 31, 32 in relation to each other. In some embodiments, a position sensor and a trigger pin may be provided in order to detect that the retracting assembly is in the towing position and may provide a signal to the actuator to stop the movement of the threaded spindle 37. The actuator 4 may be arranged within the retracting assembly 3, such as e.g. coaxially arranged with the first and second retracting members 31, 32 inside the retracting assembly 3.

The first retracting member 31 further comprises a first set of locking members 35a and the second retracting member 32 further comprises a second set of locking members 35b. The first and the second locking members 35a, 35b may be fixedly arranged to the first and second retracting members 31, 32 respectively. The first and the second set of locking members 35a, 35b are arranged opposite to each other, wherein the first set of locking members 35a is arranged to engage with the second set of locking members 35b when the towing hook 1 is in the towing position. Thereby a rotational movement of the second retracting member 32 in relation to the first retracting member 31, or vice versa, is prevented in the towing position. The locking members 35a, 35b may be arranged to engage in order to lock the first and the second retracting members 31, 32 in a rotationally fixed manner. The locking members 35a, 35b are capable of carrying an additional load acting on the towing hook when a towable or carryable object is attached to the towing hook 1 and thus ensure that the additional load applied to the towing hook 1 does not cause a rotation of the towing hook 1 away from the towing position. In some embodiments herein, the locking force in the retracted and/or in the towing position may be increased by preloading the actuator 4, when the one or more guiding protrusions 34 is/are located in the first or second end section 33a, 33b of the guiding groove 33, such that the one or more guiding protrusions 34 is/are pressed against a side wall of the guiding groove 33. The pretension may also increase the friction force generated between the locking members 35a, 35b.

The first and second set of locking members 35a, 35b may in some embodiments be comprised of a plurality of protrusions, e.g. in the form teeth. The protrusions may respectively be arranged around a circumference of a surface of the first and the second retracting members 31, 32, wherein the surfaces of the first and the second retracting members 31, 32 extend in a plane perpendicular to the rotation axis R. The plurality of protrusions may be evenly distributed around the circumference of the end surface of the first and second retracting members 31, 32. The protrusions of the first and second locking members may e.g. be arranged in a staggered manner when the retracting assembly 3 is in the towing position. Being arranged in a staggered manner shall herein be understood as the protrusions of the first set of locking members 35a being spaced away from the protrusions of the second set of locking members 35b, such that the protrusions of the first and second set of locking members 35a, 35b are not opposing each other when the retracting assembly 3 is in the towing position. Instead, each protrusion of the first set of locking members 35a opposes a gap between two protrusions of the second set of locking members 35b when the retracting assembly 3 is in the towing position, and vice versa. This allows the protrusions, e.g. the teeth, of the first and the second set of locking members to engage with each other. Preferably the distance between the protrusions on the first set of locking members 35a are spaced apart with substantially the same distance as the width of the protrusions of the second set of locking members 35b and vice versa. Thereby a shape-fit is created between the first and second set of locking members 35a, 35b. The protrusions of the first and second set of locking members 35a, 35b may have multiple identical or multiple different geometries.

The first locking member 35a may also be a single protrusion, such as e.g. a pin, and the second locking member 35b may be a receiving member adapted to receive the pin when the towing hook is in the towing position. The receiving member may e.g. be a bore or a through-hole in one of the first or the second retracting members 31, 32. Naturally, the second locking member 35b may be a single protrusion, such as e.g. a pin, and the first locking member 35a may be a receiving member adapted to receive the pin without departing from the scope of the embodiments herein.

A first end section 33a of the circumferential guiding groove may extend in a substantially axial direction of the first retracting member 31, such that when the one or more guiding protrusions 34 of the second retracting member 32 slide/s through the end section of the circumferential guiding groove 33 of the first retracting member 31, the first and the second retracting members 31, 32 perform a substantially translatory movement which causes the first and the second set of locking members 31, 32 to engage.

The first and the second retracting members 31, 32 may have a cylindrical shape, which may also be referred to as a tubular shape. An inner diameter of one of the first and the second members 31, 32 may be larger than the outer diameter of the other of the first and the second member 31, 32, wherein one of the first and the second members 31, 32 is adapted to receive the other of the first and the second members 31, 32 in a coaxial manner. In the embodiment shown in figure 2 the first retracting member 31 has an inner diameter larger than the outer diameter of the second retracting member 32, such that the second retracting member 32 may be inserted into the first retracting member 31 in a coaxial manner. The one or more guiding protrusions 34 thus protrude/s outward in a radial direction from the second retracting member 32 and engages the circumferential guiding grooves 33 from an inside of the first retracting member 31. In a second embodiment (not shown in figure 2) the second retracting member 32 may have an inner diameter larger than the outer diameter of the first retracting member 31, such that the first retracting member 31 may be inserted into the second retracting member 32 in a coaxial manner. The one or more guiding protrusions 34 may thus protrude inward in a radial direction from the second retracting member 32 in order to engage the circumferential guiding grooves 33 from an outside of the first retracting member 31.

In one embodiment, the first retracting member 31 may be fixedly arranged to the towing hook 1 and the second retracting member 32 may be fixedly arranged to the cross beam 2. According to another embodiment, the first retracting member 31 may be fixedly arranged to the cross beam 2 and the second retracting member 32 may be fixedly arranged to the towing hook 1. The towing hook 1 may e.g. be fixedly attached to the first or the second retracting member 31, 32 by means of welding, or be releasably attached to the first or the second retracting member 31, 32 by means of fastening means, such as nuts, screws or bolts. In some embodiments the towing hook 1 and the first or the second retracting member 31, 32 may also be formed as an integral part, e.g. by casting.

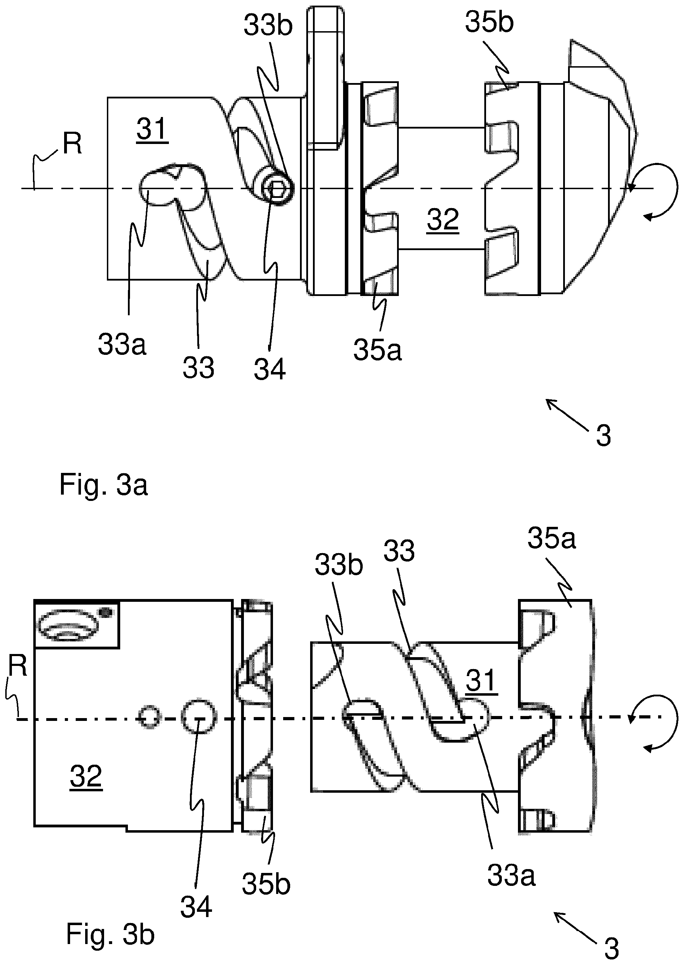

**Figure 3a** shows an assembled view of the retracting assembly 3 according to a first embodiment herein. In the first embodiment, the retracting assembly 3 is shown in a retracted position. As can be seen, the first retracting member 31 receives the second retracting member 32 in a coaxial manner. Receiving in a coaxial manner shall herein be interpreted as the second retracting member 32 being arranged inside the first retracting member 31 in such a way that the first and the second retracting members 31, 32 share the same central axis around which the first retracting member 31 and the second retracting member can rotate in relation to each other and along which the first and second retracting members 31, 32 may be displaced translationally in relation to each other. In order to secure the second retracting member 32 to the first retracting member 31 and to prevent them from separating from each other during use of the towing hook arrangement 10, one or more guiding protrusions 34 may be inserted through the one or more circumferential guiding grooves 33 and may be fixedly attached to the second retracting assembly 32. Thereby the one or more guiding protrusions 34 and the second retracting member will follow each other's movements. The one or more guiding protrusions 34 may be provided with a bearing 36 (shown in figure 2) in order to reduce the friction between the guiding protrusions 34 and the guiding groove 33. The bearing may e.g. be a slide bearing, roller bearing or a needle bearing.

The first end section 33a of the circumferential guiding groove 33 does not follow the substantially helical shape of a main section of the circumferential guiding groove 33. Instead, it extends substantially in the axial direction of the first retracting member 31. When the one or more guiding protrusions 34 of the second retracting member 32 slide/s through the first end section 33a of the circumferential guiding groove 33 of the first retracting member 31, the first and the second retracting members 31, 32 perform a substantially translational movement along the rotational axis with none or only a slight rotation in relation to each other. The rotation of the first and second retracting members 31, 32 in relation to each other may be in the range of 0-15 degrees, preferably 0-7 degrees, when the one or more guiding protrusions 34 slide/s through the first end section 33a of the guiding groove 33. The substantially translational movement allows the first and the second set of locking members 35a, 35b to engage and disengage. The disengagement of the first and second set of locking members 31, 32 allows the first and the second retracting members to rotate in relation to each other. Hence, the first and second set of locking members 35a, 35b have to be moved out of engagement with each other before the main rotation of the second retracting member 32 in relation to the first retracting member 31 caused by the helical shape of the one or more circumferential guiding grooves 33 can take place. The substantially translational movement shall herein be understood as being either linear translational with a slight rotation or only linear translational. Slight rotation shall be interpreted as substantially smaller than the rotational movement caused by the helical shape of the one or more circumferential guiding grooves 33. The length of the first end section 33a of the one or more circumferential guiding grooves 33 in the axial direction is thus equal to or longer than the extension of the protrusions of the locking members 35a, 35b in the axial direction.

The second end section 33b may also extend substantially in an axial direction of the first retracting member 31. The second end section 33b of the one or more circumferential guiding grooves 33 may be configured for receiving the one or more guiding protrusions 34 in order to lock the towing hook 1 in the retracted position. The second end section 33b of the one or more circumferential guiding groove 33 may e.g. have a V-shaped or U-shaped shape for receiving the one or more guiding protrusions 34, such that the end section prevents a rotational movement of the first and second retracting members 31, 32 in relation to each other when the one or more guiding protrusions 34 is/are pressed in the axial direction into the second end section 33b. The V-shaped form has the benefit that the one or more guiding protrusion 34 is/are secured in the V-shape when the guiding protrusion is in the retracted position, but can easily slide out of the V-shape when the one or more guiding protrusion 34 is/are moved from the retracted position towards the towing position, e.g. by means of the actuator 4. When the guiding protrusions 34 are located in the second end section 33b of the guiding groove 33, the shape of the second end section 33b prevents the first and second retracting members 31, 32 from rotating relative to each other around the rotation axis R. The actuator 4 may be used to press the one or more guiding protrusions 34 into the second end section 33b of the guiding groove 33.

Figure 3b shows an exploded view of a second embodiment of the retracting assembly 3. In this second embodiment the second retracting member 32 has an inner diameter larger than the outer diameter of the first retracting member 31, such that the first retracting member 31 may be inserted into the second retracting member 32 in a coaxial manner. The one or more guiding protrusions 34, in the illustrated embodiment shown as one or more guiding pins, may thus protrude inward in a radial direction from the second retracting member 32 in order to engage the one or more circumferential guiding grooves 33 from an outside of the first retracting member 31. The locking members 35a, 35b and the shape of the one or more guiding grooves 33 may correspond to what is described in relation to the first embodiment of the retracting assembly 3 herein.

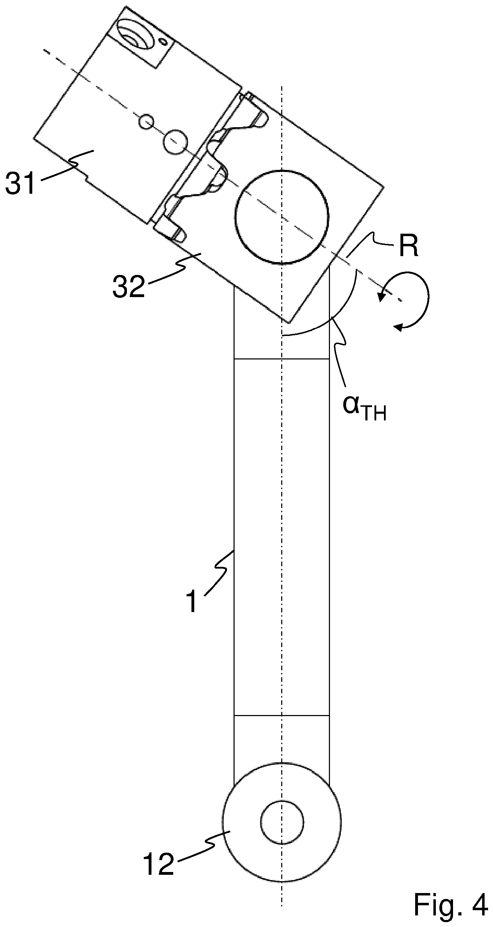

**Figure 4** shows a top down view of the retractable towing hook arrangement according to the embodiments herein. Figure 4 shows the retracting assembly 3 according to the second embodiment shown in figure 3b, however the following equally applies to the first embodiment of the retracting assembly 3. The towing hook 1 has a main extension in a main towing hook plane, wherein the main towing hook plane, when the towing hook is mounted to the vehicle 100 and is in a towing position, extends in parallel with the vertical longitudinal plane of the vehicle 100, which may also be referred to as the Y-plane of the vehicle 100. The towing hook 1 is further arranged on the first or the second retracting member 31, 32 such that the main towing hook axis is arranged at an angle α_{TH} in a range of 1-90 degrees to the rotation axis. In one embodiment, the towing hook 1 may further be arranged on the first or the second retracting member 31, 32 such that the main towing hook plane is arranged at an angle α_{TH} of 45 degrees to the rotation axis. This embodiment has the benefit that, when the retractable towing hook arrangement 10 is mounted on the vehicle and the first and the second retracting members 31, 32 are rotated 180 degrees in relation to each other around the rotation axis from the towing position to the retracted position, the towing hook 1 pivots in such a way that the main towing hook plane moves from being parallel to the vertical longitudinal plane of the vehicle to being parallel to the vertical transverse plane, which may also be referred to as the X-plane of the vehicle. This has the benefit that the towing hook 1 has its main extension in the longitudinal direction of the vehicle when the towing hook 1 is in the towing position but has its main extension parallel to an inner surface of the rear bumper of the vehicle 100 in the retracted position. This reduces the space required for storing the towing hook 1 behind the rear bumper, when the towing hook is in the retracted position.

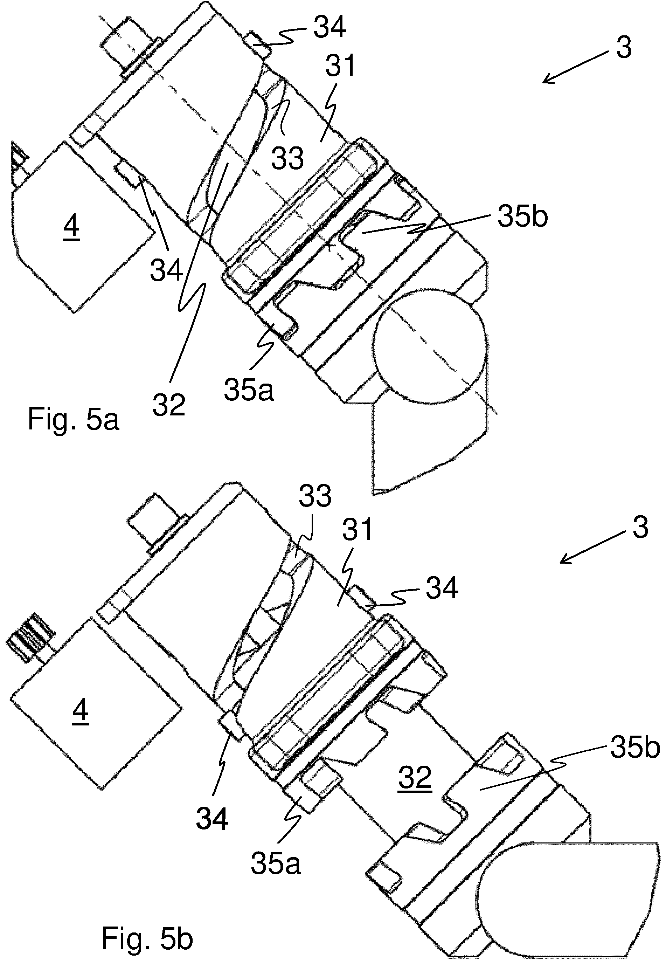

**Figures 5a** and **5b** illustrate the movement of the retracting assembly 3 when the towing hook, and hence the retracting assembly 3, is displaced from a towing position to a retracted position.

In figure 5a the retracting assembly 3 is in the towing position. In the towing position the second retracting member 32 is fully inserted into the first retracting member 31. The one or more guiding protrusions 34, illustrated as one or more guiding pins, is/are located in the substantially axially extending first end section 33a of the circumferential guiding groove 33, such that the first and second sets of locking members 35a, 35b are engaged and prevent an unwanted rotation around the rotation axis of the first and second retracting members 31, 32 in relation to each other. When the towing hook 1 is to be moved from the towing position to the retracted position, the one or more guiding protrusions 34 connected to the second retracting member 32 is/are pushed in an axial direction out of the first end section 33a and into the main section of the circumferential guiding groove 33 by means of the actuator 4. This may, when the actuator comprises the threaded spindle 37, be performed by the actuator 4 rotating the spindle 37, thereby pushing the second retracting member 32 and the one or more guiding protrusions 34 arranged on the second retracting member 32 in a translational direction out of the first end section 33a of the guiding groove 33. In this first stage of the movement, the second set of locking members 35b are axially displaced away from the first set of locking members 35a on the first retracting member 31. When the first and second set of locking members 35a, 35b are disengaged, the first and the second retracting members 31, 32 are free to perform a rotational movement in relation to each other. When the guiding protrusion 34 enters the helical section of the guiding groove 33, the one or more guiding protrusions 34 will follow the helical shape of the circumferential guiding groove 33 and perform a combined translational and rotational movement around the rotation axis. Since the one or more guiding protrusions 34 is/are fixedly connected to the second retracting member 32, the second retracting member 32 will perform a similar movement around the rotation axis. The combined translational and rotational movement of the second retracting member 32 causes the towing hook 1, when attached to the second retracting member 32, to perform a rotational and translational motion around the rotation axis which displaces the towing hook between the towing position and the retractable position. A second end section 33b of the one or more circumferential guiding grooves 33 may be configured for receiving the one or more guiding protrusions 34 in order to lock the towing hook 1 in the retracted position. The second end section 33b of the one or more circumferential guiding groove 33 may e.g. have a V-shaped form for receiving the one or more guiding protrusions 34. The V-shaped form has the benefit that the guiding protrusion 34 is secured in the V-shape when the guiding protrusion is in the retracted position, but can easily slide out of the V-shape when the guiding protrusion 34 is moved from the retracted position towards the towing position, e.g. by means of the threaded spindle 37.

In figure 5b the retracting assembly 3 is shown in the retracted position of the towing hook 1. In order to move the towing hook 1 from the retracted position to the towing position, the actuator 4 performs a translational movement of the second retracting member 32 in relation to the first retracting member 31, or vice versa. This may e.g. be performed by rotating the threaded spindle 37 in an opposite direction to when the towing hook 1 is moved from the towing position to the retracted position. Thereby the one or more guiding protrusions 34 will be retracted from the second end section 33b of the circumferential guiding groove 33 in a substantially axial direction and into the helical main section of the circumferential guiding groove 33. The one or more guiding protrusions 34 then slide/s through the helical guiding groove 33 and perform the combined translational and rotational movement around the rotation axis together with the second retracting member 32. When the one or more guiding protrusions 34 reach/es the first end section 33a of the guiding groove 33, the one or more guiding protrusions 34 again perform/s the substantially translational movement along the rotation axis, thereby causing the locking members 35a, 35b to engage. The locking members 35a, 35b of the first and second retracting members 31, 32 may be pressed together e.g. by a force provided by the actuator.

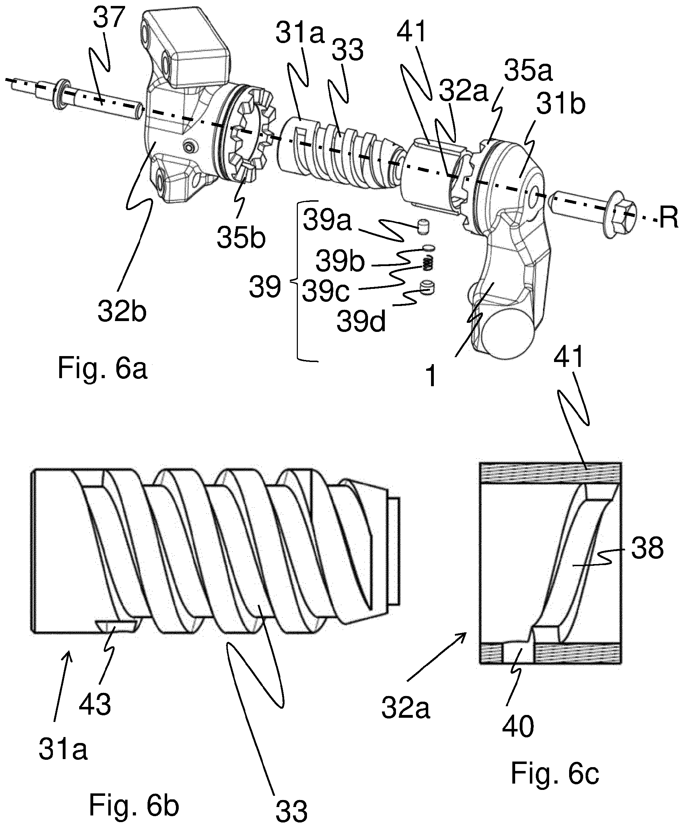

**Figures 6a-6g** illustrate a third embodiment of a retracting assembly 3 according to the invention. Many of the components of the retracting assembly 3 correspond to those described above for the first and second embodiments. However, a notable difference is that the guiding protrusion is in the form of one or more guiding profiles 38 having a helical shape.

**Figure 6a** shows an exploded view of the retracting assembly 3 of the third embodiment. In this embodiment, the first retracting member comprises a first portion 31a and a second portion 31b. The first portion 31a comprises the guiding groove 33, as is illustrated in **Figure 6b****.** The shape of the guiding groove 33 may correspond to what is described in relation to the first embodiment of the retracting assembly 3. The second portion 31b comprises the first set of locking members 35a, which may be of the kind described above.

Also the second retracting member comprises a first portion 32a and a second portion 32b. The first portion 32a of the second retracting member comprises a sleeve or a bush adapted to enclose the first portion 31a of the first retracting member, as is illustrated in **Figure** 6c. The second portion 32b of the second retracting member comprises the second set of locking members 35b, which may be of the kind described above. The retracting assembly 3 further comprises a threaded spindle 37, which may be of the type described above.

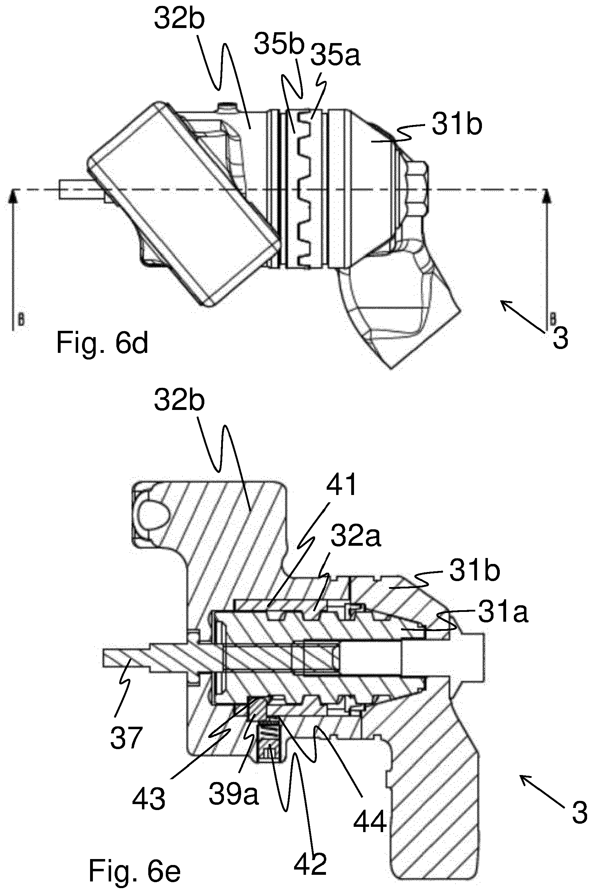

On a surface of the inner wall of the first portion 32a of the second retracting member, there is a guiding protrusion provided in the form of a protruding guiding profile 38. The guiding profile 38 has a substantially helical shape. The guiding profile 38 is adapted to cooperate, e.g. slide in, the guiding groove 33 of the first portion 31a of the first retracting member. Hence, the helical shape of the guiding profile 38 is adapted to the helical shape of the guiding groove 33, e.g. having the same helix angle. Further, the guiding profile 38 fits in the guiding groove 33. The start of the guiding profile 38 matches with the start of the guiding groove 33. The length of the guiding profile 38 is preferably selected to give sufficient contact support. Due to the helical shape, the first portion 31a of the first retracting member is moved both along the rotation axis R in a linear translation as well as in a rotation around the rotation axis R, when the guiding profile 38 moves in relation to the guiding groove 33. The movement is further explained below in conjunction with **Figures 6d-6g****.**

**Figure 6a** further illustrates a triggering mechanism 39 of the third embodiment. In the illustrated embodiment, the triggering mechanism comprises four parts:
- an inner pin 39a, adapted to cooperate with and abut the first portion 31a of the first retracting member,
- a washer 39b,
- a biasing means 39c, exemplified by a coil spring, and
- a locking element 39d, e.g. a set screw.

The biasing means 39c acts on the inner pin 39a via the washer 39b, such that the inner pin 39a is pushed into contact with the first portion 31a of the first retracting member via a through-hole 40 in the first portion 32a of the second retracting member.

**Figures 6d-6g** illustrate the function of the retracting assembly 3. **Figure 6d** shows the retracting assembly 3 when the towing hook 1 is in the towing position. The first and the second set of locking members 35a, 35b are engaged with each other. Thereby a rotational movement of the second retracting member in relation to the first retracting member, or vice versa, is prevented in the towing position.

**Figure 6e** is a cross-sectional view through the retracting assembly 3 of in the towing position **Figure 6d** taken along the line B-B. The first portion 32a of the second retracting member is located within the second portion 32b of the second retracting member. The first portion 32a is thereby rotationally locked to the second portion 32b. In the illustrated embodiment, this is due to the outer surface of the first portion 32a comprising at least one ridge 41, exemplified by two ridges, which cooperate with a corresponding groove in the second portion 32b. However, as explained below, the ridge-groove arrangement allows the first portion 32a to move axially in the second portion 32b to reach a triggered position.

The second portion 32b of the second retracting member comprises a seat 42 adapted to receive the triggering mechanism 39. Thereby, the locking element 39d, the biasing means 39c and the washer 39b are located in the seat 42. The inner pin 39a goes through the through-hole 40 of the first portion 32a of the second retracting member and abuts the first portion 31a of the first retracting member. Thereby, the inner pin 39a is located in a wedge-shaped depression 43 located on the surface the first portion 31a of the first retracting member. See also **Figure 6b****.**

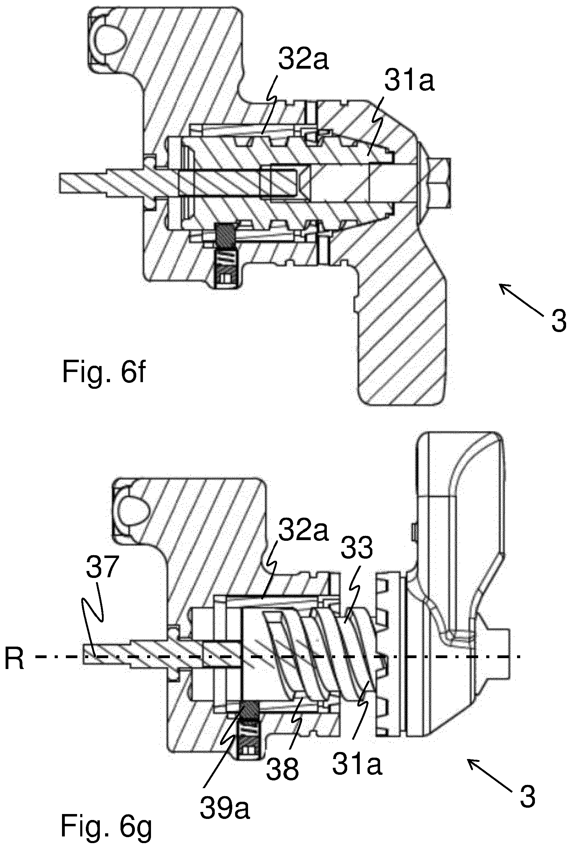

**Figure 6f** illustrates the triggered position of the retracting assembly 3, in which the first portion 31a of the first retracting member and the first portion 32a of the second retracting member have been linearly translated in the axial direction R in relation to the second portion 32b of the second retracting member. The threaded spindle 37 has moved the first portion 31a of the first retracting member, which movement is transferred via the inner pin 39a and the through-hole 40 to the first portion 32a of the second retracting member. Hence the locking members 35a, 35b have been disengaged from each other, which will allow for rotational displacement of the first retracting member. The linear translation also makes the inner pin 39a move in the axial direction, since the through-hole 40 moves with the first portion 32a of the second retracting member. However, in the triggered position, the inner pin 39a has reached a stop 44 at an edge of the seat 42. The stop 44 prevents further axial movement of the inner pin 39a and thus also prevents further axial movement of the first portion 32a of the second retracting member. At this point, the first portion 31a of the first retracting member pushes the inner pin 39a into the seat 42 against the force of the biasing means 39c and thereby lock the first portion 32a of the second retracting member in place, preventing it to retract when the direction of the threaded spindle 37 is reversed at the retracted position.

**Figure 6g** illustrates the retracted position of the retracting assembly 3, in which the towing hook 1 has been moved out of the way. When moving from the triggered position illustrated in **Figure 6f** to the retracted position of **Figure 6g****,** the first portion 31a of the first retracting member rotates in relation to the first portion 32a of the second retracting member by means of the guiding profile 38 moving along the guiding groove 33. Thereby a combined rotational and linear translational movement of the first portion 31a of the first retracting member is obtained. The rotation makes the towing hook 1 rotate out of the way to the retracted position. The movement of the first portion 31a of the first retracting member is thereby performed by means of the threaded spindle 37. The first portion 32a of the second retracting member is retained in place by means of the triggering mechanism 39, since the inner pin 39a cannot move any further in the axial direction.

If moving from the retracted position to the towing position, the steps are performed in a reverse order.

Embodiments herein further relate to a vehicle comprising the retractable towing hook arrangement 10 according to the embodiments described herein.

The one or more circumferential guiding grooves may either be facing inwardly or outwardly from the first retracting member for meeting and interconnecting with the one or more guiding protrusions, which consequently is/are facing in the opposite direction. The one or more circumferential guiding grooves may, as in e.g. Figure 2, be given the shape of a through-hole through the first retracting member. Consequently, the first retracting member may be located either as a sleeve surrounding the second retracting member as in Figure 2, or the second retracting member may be located as a sleeve surrounding the first retracting member.

Further modifications of the towing hook arrangement within the scope of the appended claims are feasible. As such, the present invention should not be considered as limited by the embodiments and figures described herein. Rather, the full scope of the invention should be determined by the appended claims, with reference to the description and drawings.

## Claims

1. A retractable towing hook arrangement (10) for a vehicle (100), said towing hook arrangement (10) comprising a towing hook (1) for being connected to an object to be towed or carried, a cross beam (2) adapted for being mounted to the vehicle (100) and a retracting assembly (3) enabling said towing hook (1) to be displaced in relation to the cross beam (2) between a towing position and a retracted position when mounted on said vehicle,
wherein the towing hook (1) has a main extension along a main towing hook axis in a main towing hook plane, said main towing hook plane extending in parallel with a vertical longitudinal plane of the vehicle (100) when said towing hook (1) is in said towing position, and
wherein the retracting assembly (3) comprises a first retracting member (31) and a second retracting member (32) being rotatably arranged around a rotation axis (R) in relation to each other and slidably arranged along the rotation axis (R) in relation to each other, wherein the first retracting member (31) comprises one or more circumferential guiding grooves (33) and the second retracting member (32) comprises one or more guiding protrusions (34), each of the one or more guiding protrusions (34) being slidably arranged in one of the one or more circumferential guiding grooves (33), wherein the one or more circumferential guiding grooves (33) has/have a substantially helical shape, such that a translational movement of the one or more guiding protrusions (34) through or along the one or more guiding grooves (33) in the first retracting member (31) creates a rotational movement of the second retracting member (32) in relation to the first retracting member (31) around the rotation axis (R), and
wherein the first retracting member (31) comprises a first set of locking members (35a) being arranged to engage with a second set of locking members (35b) being fixedly arranged to the second retracting member (32) when the towing hook (1) is in the towing position, in order to prevent a rotational movement of the first retracting member (31) in relation to the second retracting member (32)
**characterized in that**
the towing hook (1) is arranged on the first or second retracting member (31, 32) such that the main towing hook axis is arranged at an angle α_{TH} in a range of 1 to 90 degrees, preferably 45 degrees, to the rotation axis (R), as seen in a top down view with the towing hook (1) being in the towing position.

2. The retractable towing hook arrangement (10) according to claim 1, wherein the one or more guiding protrusions is/are constituted by one or more guiding pins (34).

3. The retractable towing hook arrangement (10) according to claim 1 or 2, wherein the one or more guiding protrusions is/are constituted by one or more guiding profiles (38) located on a surface of the second retracting member (32), said one or more guiding profiles (38) preferably having a substantially helical shape.

4. The retractable towing hook arrangement (10) according to any of the claims 1 to 3, wherein the retracting assembly (3) comprises an actuator (4) for performing the translational movement of the first retracting member (31) and the second retracting member (32) in relation to each other.

5. The retractable towing hook arrangement (10) according to claim 4, wherein the actuator comprises a threaded spindle (37) being rotatably arranged on the first or the second retracting member (31, 32) and wherein the other of the first and second retracting member comprises an actuator receiving portion (37a) comprising a threaded through-hole (37b) for receiving the threaded spindle (37), such that a rotation of the threaded spindle (37) causes the translational movement of the first and second retracting members (31, 32) in relation to each other.

6. The retractable towing hook arrangement (10) according to any of the claims 1 to 5, wherein the first and the second retracting member (31, 32) have a cylindrical shape and wherein an inner diameter of one of the first and the second members (31, 32) is larger than the outer diameter of the other of the first and the second member (31, 32), wherein one of the first and the second members (31, 32) is adapted to receive the other of the first and the second members (31, 32) in a coaxial manner.

7. The retractable towing hook arrangement (10) according to any of the claims 1 to 6, wherein the locking members (35a, 35b) are arranged to engage in order to lock the first and the second retracting members (31, 32) in a rotationally fixed manner, when the towing hook (1) is in the towing position.

8. The retractable towing hook arrangement (10) according to any of the claims 1 to 7, wherein the locking members (35a, 35b) comprise a plurality of protrusions, and wherein the plurality of protrusions of the first and second locking members (35a, 35b) are respectively arranged around a circumference of the first and the second retracting members (31, 32) on a surface of the first and second retracting members (31, 32) arranged perpendicular to the rotation axis (R).

9. The retractable towing hook arrangement (10) according to any of the claims 1 to 7, wherein the first locking member is a single protrusion and the second locking member is a receiving member adapted to receive the single protrusion when the towing hook (1) is in the towing position.

10. The retractable towing hook arrangement (10) according to any of the previous claims, wherein a first end section (33a) of the circumferential guiding groove (33) extends in a substantially axial direction, such that when the one or more guiding protrusions (34) of the second retracting member (32) slide/s through the first end section (33a) of the one or more guiding grooves (33) of the first retracting member (31), the first and the second retracting members (31, 32) perform a substantially linear translatory movement which causes the first and the second set of locking members (35a, 35b) to engage.

11. The retractable towing hook arrangement (10) according to any of the previous claims, wherein the helical shape of the guiding groove (33) has a helix angle in the range of 5-50 degrees in relation to the rotation axis (R).

12. The retractable towing hook arrangement (10) according to any of the previous claims, wherein the helical shape has a helix angle in the range of 7-45 degrees in relation to the rotation axis (R).

13. The retractable towing hook arrangement (10) according to any of the previous claims, wherein the first retracting member (31) is fixedly arranged to the towing hook (1) and the second retracting member (32) is fixedly arranged to the cross beam (2), or wherein the first retracting member (31) is fixedly arranged to the cross beam (2) and the second retracting member (32) is fixedly arranged to the towing hook (1).

14. The retractable towing hook arrangement (10) according to any of the previous claims, wherein the one or more guiding protrusions (34) is/are slidably arranged in the one or more guiding grooves (33) by means of bearings (36).

15. The retractable towing hook arrangement (10) according to any of the previous claims, wherein the towing hook arrangement is configured to assume a triggered position, located in between the towing position and the retracted position, said towing hook arrangement being configured such that there is a linear translational displacement along the rotation axis (R) from the towing position to the triggered position, during which the position of the one or more guiding grooves (33) is not altered in relation to the position of the one or more guiding protrusions (38) at the same time as the first set of locking members (35a) and the second set of locking members (35b) are disengaged from each other, and such that there is a combined rotational and linear translational displacement from the triggered position to the retracted position, during which the one or more guiding protrusions (38) is/are displaced in relation to the one or more guiding grooves (33).

16. The towing hook arrangement according to claim 15 comprising a triggering mechanism (39), which is adapted to be activated in the triggered position.

17. A vehicle (100) comprising the retractable towing hook arrangement (10) according to any of the claims 1 to 16.

## Patentansprüche

1. Einziehbare Abschlepphakenanordnung (10) für ein Fahrzeug (100), wobei die Abschlepphakenanordnung (10) einen Abschlepphaken (1) zum Verbinden mit einem Objekt, das abgeschleppt oder getragen werden soll, einen Querträger (2), der angepasst ist, um an dem Fahrzeug (100) montiert zu sein, und einen Einziehaufbau (3) umfasst, der dem Abschlepphaken (1) ermöglicht, in Bezug auf den Querträger (2) zwischen einer Abschleppposition und einer eingezogenen Position verschoben zu werden, wenn er an dem Fahrzeug montiert ist,
wobei der Abschlepphaken (1) eine Hauptverlängerung entlang einer Abschlepphakenhauptachse in einer Abschlepphakenhauptebene aufweist, wobei sich die Abschlepphakenhauptebene parallel zu einer vertikalen Längsebene des Fahrzeugs (100) erstreckt, wenn der Abschlepphaken (1) sich in der Abschleppposition befindet, und
wobei der Einziehaufbau (3) ein erstes Einziehelement (31) und ein zweites Einziehelement (32) umfasst, die um eine Drehachse (R) in Bezug zueinander drehbar angeordnet sind und entlang der Drehachse (R) in Bezug zueinander gleitbar angeordnet sind, wobei das erste Einziehelement (31) eine oder mehrere umlaufende Führungsnuten (33) umfasst und das zweite Einziehelement (32) einen oder mehrere Führungsvorsprünge (34) umfasst, wobei jeder des einen oder der mehreren Führungsvorsprünge (34) in einer der einen oder der mehreren umlaufenden Führungsnuten (33) gleitbar angeordnet ist, wobei die eine oder die mehreren umlaufenden Führungsnuten (33) eine im Wesentlichen spiralförmige Form derart aufweist/aufweisen, dass eine Translationsbewegung des einen oder der mehreren Führungsvorsprünge (34) durch oder entlang der einen oder der mehreren Führungsnuten (33) in dem ersten Einziehelement (31) eine Drehbewegung des zweiten Einziehelements (32) in Bezug auf das erste Einziehelement (31) um die Drehachse (R) erzeugt, und
wobei das erste Einziehelement (31) einen ersten Satz von Verriegelungselementen (35a) umfasst, die angeordnet sind, um mit einem zweiten Satz von Verriegelungselementen (35b) in Eingriff zu stehen, die an dem zweiten Einziehelement (32) fest angeordnet sind, wenn der Abschlepphaken (1) sich in der Abschleppposition befindet, um eine Drehbewegung des ersten Einziehelements (31) in Bezug auf das zweite Einziehelement (32) zu verhindern,
**dadurch gekennzeichnet, dass**
der Abschlepphaken (1) an dem ersten oder zweiten Einziehelement (31, 32) derart angeordnet ist, dass die Abschlepphakenhauptachse in einem Winkel α_{TH} in einem Bereich von 1 bis 90 Grad, bevorzugt 45 Grad, zu der Drehachse (R) angeordnet ist, wie von oben nach unten betrachtet, wobei sich der Abschlepphaken (1) in der Abschleppposition befindet.

2. Einziehbare Abschlepphakenanordnung (10) nach Anspruch 1, wobei der eine oder die mehreren Führungsvorsprünge durch einen oder mehrere Führungsstifte (34) ausgebildet wird/werden.

3. Einziehbare Abschlepphakenanordnung (10) nach Anspruch 1 oder 2, wobei der eine oder die mehreren Führungsvorsprünge durch ein oder mehrere Führungsprofile (38) ausgebildet wird/werden, die auf einer Oberfläche des zweiten Einziehelements (32) gelegen sind, wobei das eine oder die mehreren Führungsprofile (38) bevorzugt eine im Wesentlichen spiralförmige Form aufweisen.

4. Einziehbare Abschlepphakenanordnung (10) nach einem der Ansprüche 1 bis 3, wobei der Einziehaufbau (3) einen Aktuator (4) zum Durchführen der Translationsbewegung des ersten Einziehelements (31) und des zweiten Einziehelements (32) in Bezug zueinander umfasst.

5. Einziehbare Abschlepphakenanordnung (10) nach Anspruch 4, wobei der Aktuator eine Gewindespindel (37) umfasst, die an dem ersten oder dem zweiten Einziehelement (31, 32) drehbar angeordnet ist, und wobei das andere des ersten und des zweiten Einziehelements einen Aktuatoraufnahmeabschnitt (37a) umfasst, der ein gewindetes Durchgangsloch (37b) zum Aufnehmen der Gewindespindel (37) derart umfasst, dass eine Drehung der Gewindespindel (37) die Translationsbewegung des ersten und des zweiten Einziehelements (31, 32) in Beziehung zueinander verursacht.

6. Einziehbare Abschlepphakenanordnung (10) nach einem der Ansprüche 1 bis 5, wobei das erste und das zweite Einziehelement (31, 32) eine zylindrische Form aufweisen und wobei ein Innendurchmesser des ersten oder des zweiten Elements (31, 32) größer ist als der Außendurchmesser des anderen des ersten und des zweiten Elements (31, 32), wobei das erste oder das zweite Element (31, 32) angepasst ist, um das andere des ersten und des zweiten Elements (31, 32) auf eine koaxiale Weise aufzunehmen.

7. Einziehbare Abschlepphakenanordnung (10) nach einem der Ansprüche 1 bis 6, wobei die Verriegelungselemente (35a, 35b) angeordnet sind, um in Eingriff zu stehen, um das erste und das zweite Einziehelement (31, 32) auf eine drehfeste Weise zu verriegeln, wenn sich der Abschlepphaken (1) in der Abschleppposition befindet.

8. Einziehbare Abschlepphakenanordnung (10) nach einem der Ansprüche 1 bis 7, wobei die Verriegelungselemente (35a, 35b) mehrere Vorsprünge umfassen und wobei die mehreren Vorsprünge des ersten und des zweiten Verriegelungselements (35a, 35b) jeweils um einen Umfang des ersten und des zweiten Einziehelements (31, 32) auf einer Oberfläche des ersten und des zweiten Einziehelements (31, 32) angeordnet sind, die senkrecht zu der Drehachse (R) angeordnet sind.

9. Einziehbare Abschlepphakenanordnung (10) nach einem der Ansprüche 1 bis 7, wobei das erste Verriegelungselement ein einzelner Vorsprung ist und das zweite Verriegelungselement ein Aufnahmeelement ist, das angepasst ist, um den einzelnen Vorsprung aufzunehmen, wenn der Abschlepphaken (1) sich in der Abschleppposition befindet.

10. Einziehbare Abschlepphakenanordnung (10) nach einem der vorhergehenden Ansprüche, wobei sich eine erste Endsektion (33a) der umlaufenden Führungsnut (33) in eine im Wesentlichen axiale Richtung derart erstreckt, dass, wenn der eine oder die mehreren Führungsvorsprünge (34) des zweiten Einziehelements (32) durch die erste Endsektion (33a) der einen oder der mehreren Führungsnuten (33) des ersten Einziehelements (31) gleitet/gleiten, das erste und das zweite Einziehelement (31, 32) eine im Wesentlichen lineare Translationsbewegung durchführen, die den ersten und den zweiten Satz von Verriegelungselementen (35a, 35b) veranlasst, in Eingriff zu stehen.

11. Einziehbare Abschlepphakenanordnung (10) nach einem der vorhergehenden Ansprüche, wobei die spiralförmige Form der Führungsnut (33) einen Spiralwinkel in dem Bereich von 5-50 Grad in Bezug auf die Drehachse (R) aufweist.

12. Einziehbare Abschlepphakenanordnung (10) nach einem der vorhergehenden Ansprüche, wobei die spiralförmige Form einen Spiralwinkel in dem Bereich von 7-45 Grad in Bezug auf die Drehachse (R) aufweist.

13. Einziehbare Abschlepphakenanordnung (10) nach einem der vorhergehenden Ansprüche, wobei das erste Einziehelement (31) an dem Abschlepphaken (1) fest angeordnet ist und das zweite Einziehelement (32) an dem Querträger (2) fest angeordnet oder wobei das erste Einziehelement (31) an dem Querträger (2) fest angeordnet ist und das zweite Einziehelement (32) an dem Abschlepphaken (1) fest angeordnet ist.

14. Einziehbare Abschlepphakenanordnung (10) nach einem der vorhergehenden Ansprüche, wobei der eine oder die mehreren Führungsvorsprünge (34) mittels Lagern (36) in der einen oder den mehreren Führungsnuten (33) gleitbar angeordnet ist/sind.

15. Einziehbare Abschlepphakenanordnung (10) nach einem der vorhergehenden Ansprüche, wobei die Abschlepphakenanordnung konfiguriert ist, um eine ausgelöste Position einzunehmen, die zwischen der Abschleppposition und der eingezogenen Position gelegen ist, wobei die Abschlepphakenanordnung derart konfiguriert ist, dass eine lineare Translationsverschiebung entlang der Drehachse (R) von der Abschleppposition zu der ausgelösten Position stattfindet, während der die Position der einen oder der mehreren Führungsnuten (33) in Bezug auf die Position des einen oder der mehreren Führungsvorsprünge (38) nicht zu derselben Zeit verändert wird, zu der der erste Satz von Verriegelungselementen (35a) und der zweite Satz von Verriegelungselementen (35b) außer Eingriff gebracht werden, und derart, dass eine kombinierte Dreh- und lineare Translationsverschiebung von der ausgelösten Position zu der eingezogenen Position stattfindet, während der der eine oder die mehreren Führungsvorsprünge (38) in Bezug auf die eine oder die mehreren Führungsnuten (33) verschoben wird/werden.

16. Abschlepphakenanordnung nach Anspruch 15, die einen Auslösemechanismus (39) umfasst, der angepasst ist, um in der ausgelösten Position aktiviert zu werden.

17. Fahrzeug (100), das die einziehbare Abschlepphakenanordnung (10) nach einem der Ansprüche 1 bis 16 umfasst.

## Revendications

1. Agencement de crochet de remorquage rétractable (10) pour un véhicule (100), ledit agencement de crochet de remorquage (10) comprenant un crochet de remorquage (1) destiné à être relié à un objet à remorquer ou à transporter, une traverse (2) adaptée pour être montée sur le véhicule (100) et un ensemble de rétraction (3) permettant de déplacer ledit crochet de remorquage (1) par rapport à la traverse (2) entre une position de remorquage et une position rétractée lorsqu'il est monté sur ledit véhicule,
le crochet de remorquage (1) ayant une extension principale le long d'un axe de crochet de remorquage principal dans un plan de crochet de remorquage principal, ledit plan de crochet de remorquage principal s'étendant parallèlement à un plan longitudinal vertical du véhicule (100) lorsque ledit crochet de remorquage (1) est dans ladite position de remorquage, et
l'ensemble de rétraction (3) comprenant un premier élément de rétraction (31) et un second élément de rétraction (32) agencés de manière rotative autour d'un axe de rotation (R) l'un par rapport à l'autre et agencés de manière coulissante le long de l'axe de rotation (R) l'un par rapport à l'autre, le premier élément de rétraction (31) comprenant une ou plusieurs rainures de guidage circonférentielles (33) et le second élément de rétraction (32) comprenant une ou plusieurs saillies de guidage (34), chacune de la ou des saillies de guidage (34) étant agencée de manière coulissante dans l'une de la ou des rainures de guidage circonférentielles (33), la ou les rainures de guidage circonférentielles (33) ayant une forme sensiblement hélicoïdale, de telle sorte qu'un mouvement de translation de la ou des saillies de guidage (34) à travers ou le long de la ou des rainures de guidage (33) dans le premier élément de rétraction (31) crée un mouvement de rotation du second élément de rétraction (32) par rapport au premier élément de rétraction (31) autour de l'axe de rotation (R), et
le premier élément de rétraction (31) comprenant un premier ensemble d'éléments de verrouillage (35a) agencé pour entrer en prise avec un second ensemble d'éléments de verrouillage (35b) agencé à demeure sur le second élément de rétraction (32) lorsque le crochet de remorquage (1) est en position de remorquage, afin d'empêcher un mouvement de rotation du premier élément de rétraction (31) par rapport au second élément de rétraction (32)
**caractérisé en ce que**
le crochet de remorquage (1) est agencé sur le premier ou le second élément de rétraction (31, 32) de telle sorte que l'axe de crochet de remorquage principal est agencé à un angle α_{TH} dans une plage de 1 à 90 degrés, de préférence 45 degrés, par rapport à l'axe de rotation (R), comme vu dans une vue de haut en bas avec le crochet de remorquage (1) en position de remorquage.

2. Agencement de crochet de remorquage rétractable (10) selon la revendication 1, la ou les saillies de guidage étant constituées par une ou plusieurs broches de guidage (34).

3. Agencement de crochet de remorquage rétractable (10) selon la revendication 1 ou 2, la ou les saillies de guidage étant constituées par un ou plusieurs profils de guidage (38) situés sur une surface du second élément de rétraction (32), ledit un ou plusieurs profils de guidage (38) ayant de préférence une forme sensiblement hélicoïdale.

4. Agencement de crochet de remorquage rétractable (10) selon l'une quelconque des revendications 1 à 3, l'ensemble de rétraction (3) comprenant un actionneur (4) pour effectuer le mouvement de translation du premier élément de rétraction (31) et du second élément de rétraction (32) l'un par rapport à l'autre.

5. Agencement de crochet de remorquage rétractable (10) selon la revendication 4, l'actionneur comprenant une tige filetée (37) agencée de manière rotative sur le premier ou le second élément de rétraction (31, 32) et l'autre des premier et second éléments de rétraction comprenant une partie de réception d'actionneur (37a) comprenant un trou traversant fileté (37b) pour recevoir la tige filetée (37), de telle sorte qu'une rotation de la tige filetée (37) provoque le mouvement de translation des premier et second éléments de rétraction (31, 32) l'un par rapport à l'autre.

6. Agencement de crochet de remorquage rétractable (10) selon l'une quelconque des revendications 1 à 5, le premier et le second élément de rétraction (31, 32) ayant une forme cylindrique et, un diamètre interne de l'un des premier et second éléments (31, 32) étant supérieur au diamètre externe de l'autre des premier et second éléments (31, 32), le premier ou le second élément (31, 32) étant adapté pour recevoir l'autre des premier et second éléments (31, 32) de manière coaxiale.

7. Agencement de crochet de remorquage rétractable (10) selon l'une quelconque des revendications 1 à 6, les éléments de verrouillage (35a, 35b) étant agencés pour entrer en prise afin de verrouiller les premier et second éléments de rétraction (31, 32) de manière solidaire en rotation, lorsque le crochet de remorquage (1) est en position de remorquage.

8. Agencement de crochet de remorquage rétractable (10) selon l'une quelconque des revendications 1 à 7, les éléments de verrouillage (35a, 35b) comprenant une pluralité de saillies, et la pluralité de saillies des premier et second éléments de verrouillage (35a, 35b) étant respectivement agencées autour d'une circonférence des premier et second éléments de rétraction (31, 32) sur une surface des premier et second éléments de rétraction (31, 32) agencés perpendiculairement à l'axe de rotation (R).

9. Agencement de crochet de remorquage rétractable (10) selon l'une quelconque des revendications 1 à 7, le premier élément de verrouillage étant une saillie unique et le second élément de verrouillage étant un élément de réception adapté pour recevoir la saillie unique lorsque le crochet de remorquage (1) est en position de remorquage.

10. Agencement de crochet de remorquage rétractable (10) selon l'une quelconque des revendications précédentes, une première section d'extrémité (33a) de la rainure de guidage circonférentielle (33) s'étendant dans une direction sensiblement axiale, de telle sorte que lorsque la ou les saillies de guidage (34) du second élément de rétraction (32) coulissent à travers la première section d'extrémité (33a) de la ou des rainures de guidage (33) du premier élément de rétraction (31), les premier et second éléments de rétraction (31, 32) effectuent un mouvement de translation sensiblement linéaire qui provoque l'entrée en prise du premier et du second ensemble d'éléments de verrouillage (35a, 35b).

11. Agencement de crochet de remorquage rétractable (10) selon l'une quelconque des revendications précédentes, la forme hélicoïdale de la rainure de guidage (33) ayant un angle d'hélice compris dans la plage de 5 à 50 degrés par rapport à l'axe de rotation (R).

12. Agencement de crochet de remorquage rétractable (10) selon l'une quelconque des revendications précédentes, la forme hélicoïdale ayant un angle d'hélice dans la plage de 7 à 45 degrés par rapport à l'axe de rotation (R).

13. Agencement de crochet de remorquage rétractable (10) selon l'une quelconque des revendications précédentes, le premier élément de rétraction (31) étant agencé à demeure sur le crochet de remorquage (1) et le second élément de rétraction (32) étant agencé à demeure sur la traverse (2), ou le premier élément de rétraction (31) étant agencé à demeure sur la traverse (2) et le second élément de rétraction (32) étant agencé à demeure sur le crochet de remorquage (1).

14. Agencement de crochet de remorquage rétractable (10) selon l'une quelconque des revendications précédentes, la ou les saillies de guidage (34) étant agencées de manière coulissante dans la ou les rainures de guidage (33) au moyen de paliers (36).

15. Agencement de crochet de remorquage rétractable (10) selon l'une quelconque des revendications précédentes, l'agencement de crochet de remorquage étant conçu pour adopter une position déclenchée, située entre la position de remorquage et la position rétractée, ledit agencement de crochet de remorquage étant conçu de telle sorte qu'il y a un déplacement en translation linéaire le long de l'axe de rotation (R) de la position de remorquage à la position déclenchée, pendant lequel la position de la ou des rainures de guidage (33) n'est pas modifiée par rapport à la position de la ou des saillies de guidage (38) en même temps que le premier ensemble d'éléments de verrouillage (35a) et le second ensemble d'éléments de verrouillage (35b) sont dégagés l'un de l'autre, et de telle sorte qu'il y a un déplacement combiné en rotation et en translation linéaire de la position déclenchée à la position rétractée, pendant lequel la ou les saillies de guidage (38) sont déplacées par rapport à la ou aux rainures de guidage (33).

16. Agencement de crochet de remorquage selon la revendication 15, comprenant un mécanisme de déclenchement (39), qui est adapté pour être activé dans la position déclenchée.

17. Véhicule (100) comprenant l'agencement de crochet de remorquage rétractable (10) selon l'une quelconque des revendications 1 à 16.
